(19) Europäisches Patentamt

European Patent Office

Office européen des brevets

(11) **EP 1 679 454 A1**

(12) **EUROPEAN PATENT APPLICATION**
published in accordance with Art. 158(3) EPC

(43) Date of publication:
**12.07.2006 Bulletin 2006/28**

(51) Int Cl.:
*F16H 25/22* (1968.09)

(21) Application number: **04787649.5**

(22) Date of filing: **06.09.2004**

(86) International application number:
**PCT/JP2004/012945**

(87) International publication number:
**WO 2005/038301 (28.04.2005 Gazette 2005/17)**

(84) Designated Contracting States:
**DE IT**

(30) Priority: **20.10.2003 JP 2003360042**

(71) Applicant: **THK CO., LTD.**
**Shinagawa-ku,**
**Tokyo 141-0031 (JP)**

(72) Inventors:
• **TERAMACHI, Akihiro,**
**c/o THK Co., Ltd.**
**Tokyo 1410031 (JP)**

• **MICHIOKA, Hidekazu,**
**c/o THK Co., Ltd.**
**Tokyo, 1410031 (JP)**
• **NIWA, Hiroshi,**
**c/o THK Co., Ltd.**
**Tokyo, 1410031 (JP)**
• **NISHIMURA, Kentaro,**
**c/o THK Co., Ltd.**
**Tokyo, 1410031 (JP)**

(74) Representative: **Viering, Jentschura & Partner**
**Steinsdorfstrasse 6**
**80538 München (DE)**

(54) **ROLLER SCREW**

(57) There is provided a roller screw comprising: a screw shaft 1 formed, on an outer peripheral surface thereof, with a spiral roller rolling groove 1a; a nut member 2 formed, on an inner peripheral surface thereof, with a spiral loaded roller rolling groove 2a opposing to the roller rolling groove 1a of the screw shaft; and a number of rollers 6 disposed between the roller rolling groove 1a and the loaded roller rolling groove 2a. A number of rollers 6 are arranged in cross shape and each of the rollers has a diameter D larger than a prescribed dimension. According to such roller screw, an optimum preload can be applied in accordance with the roller screw structure, thereby improving the rigidity of the roller screw.

FIG. 3

EP 1 679 454 A1

**Description**

Technical Field

The present invention relates to a roller screw in which rollers are disposed to be capable of carrying out a rolling motion between a screw shaft and a nut member.

Background Technology

There is known a ball screw in which balls are disposed to be movable between the screw shaft and the nut member. The balls are disposed between a spiral ball rolling groove formed to an outer peripheral surface of the screw shaft and a spiral loaded ball rolling groove formed to an inner peripheral surface of the nut member. When the screw shaft is rotated relative to the nut member, a number of balls roll on the ball rolling groove of the screw shaft and the loaded ball rolling groove of the nut member.

In the use of the ball screw, since a friction coefficient at the time of rotation of the screw shaft with respect to the nut member can be reduced, the ball screw is commercially utilized for a positioning mechanism of a machine tool, a feed mechanism, a steering gear of an automobile and so on. However, in such arrangement, the balls contact substantially at point contact to the ball rolling groove of the screw shaft surrounding the balls and the loaded ball rolling groove of the nut member surrounding the balls, so that an allowable load to be applied to the ball screw cannot be made large, thus being defective and inconvenient.

A roller screw using rollers instead of balls for making large the allowable load is disclosed, for example, in Patent Publications 1 and 2.

Patent Publication 1: Japanese Patent Laid-open Publication HEI 11-210858

Patent Publication 1: Japanese Utility Model Laid-open Publication HEI 6-87764

Disclosure of The Invention

Problems to be solved by The Invention

The roller screw is often used under a large loaded condition. Rigidity is hence an essential performance required for the roller screw. In a case where a space, i.e. play or backlash, exists between the roller and the roller rolling groove, or the rigidity is not sufficient between them even if such play does not exist, a working point of a machine, to which the roller screw is assembled, will be displaced and, hence, precise working cannot be done. In addition, at a time when the roller moves fast and rapidly stops, the machine will be vibrated and much time will be required to become stationary.

In the filed of a roller bearing, a technology for imparting a preload is well known for improving the rigidity. The roller screws using the rollers as rolling members are proposed as, for example, disclosed in the Patent Publications 1 and 2, but have not been manufactured as products, and a technology for imparting the preload to the roller screw has not been developed.

Then, an object of the present invention is to provide a roller screw capable of imparting a preload appropriately in accordance with the structure of the roller screw.

Means for solving The Problem

Hereunder, the present invention will be described. Further, in the following, reference numerals on the accompanying drawings are added with parenthesis for the easy understanding of the present invention, but the present invention is not limited to an embodiment shown in the drawings.

The invention of claim 1 for solving the above problem is a roller screw comprising: a screw shaft (1) formed, on an outer peripheral surface thereof, with a spiral roller rolling groove (1a) having a V-shape in section; a nut member (2) formed, on an inner peripheral surface thereof, with a spiral loaded roller rolling groove (2a) having a V-shape in section opposing to the V-shaped roller rolling groove (1a) of the screw shaft (1); and a number of rollers (6) disposed between the roller rolling groove (1a) and the loaded roller rolling groove (2a), wherein a number of rollers (6) include a roller group (α group) bearing the load ((1)) in axial one direction of the screw shaft (1) and a roller group (β group) arranged in cross shape to be perpendicular to the axis of the α group roller in a roller advancing direction and adapted to bear the load ((2)) in an direction opposing to the axial one direction of the screw shaft (1), and each of the number of rollers (6) has a diameter (D) larger than a distance between a wall surface of the roller rolling groove (1a) and a wall surface of the loaded roller rolling groove (2a) which opposes to the above-mentioned wall surface.

The invention of claim 2 is a roller screw comprising: a screw shaft (1) formed, on an outer peripheral surface thereof, with a spiral roller rolling groove (1a) having a V-shape in section; a nut member (2) formed, on an inner peripheral surface thereof, with a spiral loaded roller rolling groove (2a) having a V-shape in section opposing to the V-shaped roller rolling groove (1a) of the screw shaft (1); and a number of rollers (6) disposed between the roller rolling groove (1a) and the loaded roller rolling groove (2a), wherein the loaded roller rolling groove (2a) of the nut member (2) includes a central groove section (22) having a pitch larger than a pitch (P1) of the screw shaft (1) and a pair of end groove sections (23, 24) disposed on both sides of the central groove section and having a pitch equal to the pitch (P1) of the screw shaft.

The invention of claim 3 is a roller screw comprising: a screw shaft (1) formed, on an outer peripheral surface thereof, with a spiral roller rolling groove (1a) having a V-shape in section; a nut member (2) formed, on an inner peripheral surface thereof, with a spiral loaded roller rolling groove (2a) having a V-shape in section opposing to the V-shaped roller rolling groove (1a) of the screw shaft (1); and a number of rollers (6) disposed between the roller rolling groove (1a) and the loaded roller rolling groove (2a), wherein the nut member (2) is divided in an axial direction into a first nut piece (12) and a second nut piece (12), and a shim (13) is disposed between the first and second nut pieces so as to apply compression loads to the rollers for the first nut piece (12) disposed in the first nut piece and to the rollers for the second nut piece (12) disposed in the second nut piece.

Effects of The Invention

According to the invention of claim 1, by applying the preload, both the α and β group rollers are loaded, so that twice number of rollers are loaded. Accordingly, the rollers existing inside the nut member is effectively utilized against the external force acted, and the load can be distributed to the rollers to which load is essentially not applied, thus improving the rigidity. On the contrary, if rollers each having a diameter smaller than a distance (prescribed dimension) between the wall surface of the roller rolling groove and the wall surface of the loaded roller rolling groove are used, only one of the α and β group rollers is loaded in the axial direction. Thus, only the half number of rollers is loaded.

According to the invention of claim 2, there is provided the roller screw having a increased rigidity by applying the preload.

According to the invention of claim 3, there is provided the roller screw having a increased rigidity by applying the preload.

Brief Description of The Drawings:

[FIG. 1] FIG. 1 is a sectional view showing a roller screw according to a first embodiment of the present invention.
[FIG. 2] FIG. 2 is a side view showing a screw shaft.
[FIG. 3] FIG. 3 is a detailed sectional view showing a roller rolling groove and a loaded roller rolling groove.
[FIG. 4] FIG. 4 is a graph representing a relationship in displacement caused by a charged load and a preload.
[FIG. 5] FIG. 5 is a view showing a return pipe.
[FIG. 6] FIG. 6 is a view showing a spacer disposed between the rollers.
[FIG. 7] FIG. 7 is a sectional view showing a roller screw according to a second embodiment of the present invention.
[FIG. 8] FIG. 8 is a plan view of a nut member according to a third embodiment of the present invention.
[FIG. 9] FIG. 9 is an enlarged view of a roller screw according to the third embodiment.

Explanation of Reference Numerals

1 --- screw shaft, 1a --- roller rolling groove, 2 --- nut member, 2a --- loaded roller rolling groove, 6 --- roller, 22 --- central groove, 23, 24 --- end groove, 12, 12 --- divided nut (first nut member, second nut member), 13 --- shim.

Best Mode for embodying The Invention

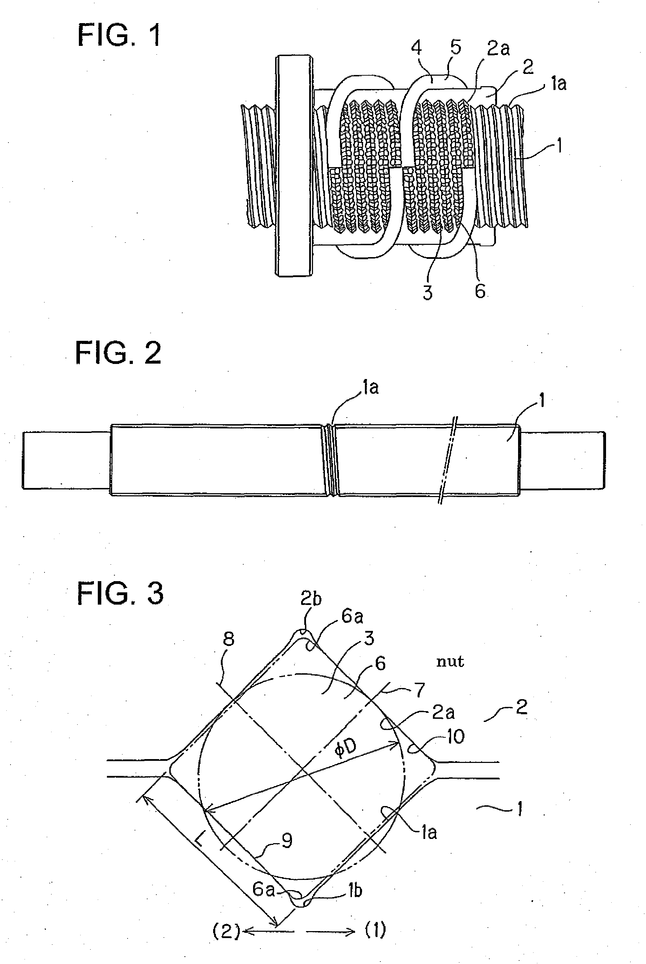

FIG. 1 shows a roller screw according to one embodiment of the present invention. The roller screw includes a screw shaft 1 formed, in its outer peripheral surface, with a roller rolling groove 1a in form of spiral and a nut member 2 formed, in its inner peripheral surface, with a loaded roller rolling groove, in form of spiral, and assembled with the screw shaft 1 to be relatively rotatable. The nut member 2 is provided with a return pipe 4 as a circulation member connecting one and the other ends of a loaded roller rolling groove 3 between the roller rolling groove 1a of the screw shaft 1 and the loaded roller rolling groove 2a of the nut member 2. Inside the return pipe 4, there is formed a roller return passage 5, having a rectangular section such as square shape in this embodiment, along the axial direction of the return pipe.

A number of rollers 6 are accommodated and arranged in the loaded roller rolling passage 3 formed by the roller rolling groove 1a of the screw shaft 1 and the loaded roller rolling groove 2a of the nut member 2 and in the roller returning passage 5 formed inside the return pipe 4. According to the relative rotation of the screw shaft 1 with respect to the nut member 2, the nut member 2 moves linearly relative to the screw shaft 1 in the axial direction thereof. In this moment, the roller 6 rolls between the roller rolling groove 1a and the loaded roller rolling groove 2a. The roller rolling to one end of the loaded roller rolling groove 2a, is guided to the roller returning passage 5 in the return pipe 4 and then returned to the other end of the loaded roller rolling groove 2a on the succeeding several turns of spiral. The rollers 6 are thereby circulate in the roller circulation passage constituted by the loaded roller rolling passage 3 and the roller returning passage 5.

FIG. 2 shows the screw shaft 1. The spiral roller rolling groove having a predetermined lead is formed in the outer peripheral surface of the screw shaft 1. The roller rolling groove 1a has a V-shaped section with an opening angle of 90 degrees. As a screw, a single threaded screw, double threaded screw, triple threaded screw or other various type screws may be utilized, and in this embodiment, double threaded screw is utilized.

FIG. 3 shows a detailed view of the roller rolling groove 1a of the screw shaft 1 and the loaded roller rolling groove 2a of the nut member 2. The nut member 2 is formed with the spiral loaded roller rolling groove 2a opposing to the roller rolling groove 1a. The loaded roller rolling groove 2a also has a V-shaped section with an opening angle of 90 degrees. A pitch of the roller rolling groove 1a of the screw shaft 1 and a pitch of the loaded roller rolling groove 2a of the nut member are constant and equal to each other along the entire lengths of the grooves. The loaded roller rolling passage 3, having a rectangular section, such as square section in this embodiment, is formed by the roller rolling groove 1a and the loaded roller rolling groove 2a. In the loaded roller rolling passage 3, a number of rollers 6 are arranged in form of cross-shape so that rotation axes 7 and 8 of the adjacent rollers 6 are perpendicular to each other as viewed along the loaded roller rolling passage 3.

In the ball screw, the balls bear the loads in one direction in the axial direction of the screw shaft and another direction opposing to that one direction. On the other hand, the rollers bear the load by compressing its peripheral surface between one wall surface of the roller rolling groove 1a and one wall surface of the loaded roller rolling groove 2a opposing to the wall surface of the roller rolling groove, so that the load only in one direction of the axial directions of the screw shaft 1 is born. By arranging the rollers 6 in form of cross-shape as in the present embodiment, the rollers 6 can bear the loads in one (1) and another (2) directions in the axial directions of the screw shaft 1. The rollers 6 bearing the load in one direction (1) in the axial direction of the screw shaft 1 are called α group rollers and, on the other hand, the rollers 6 bearing the load in the other direction (2) are called β group rollers. In order to keep good balance in the reciprocal movement, it is preferred that the numbers of the rollers in the α group and the β group are equal to each other.

Further, although in the described embodiment, the α group and β group rollers are arranged alternately as α, β, α, β, α, β, ---, they may be arranged as roller groups of α, α, α, --- β, β, β, ---, or α, α, β, β, α, α, β, β, ----.

The roller 6 has a diameter D longer than a length L thereof in the axial direction. There is used a roller 6 having a diameter D larger, so-called over-size, than a distance between a wall surface 9 of the roller rolling groove 1a and a wall surface 10 of the loaded roller rolling groove 2a opposing to the wall surface 9. Because of this reason, the roller is elastically deformed in the loaded roller rolling passage 3, and a load corresponding to this deformation exists inside the nut member 2 as preload. Since the rollers 6 are arranged in cross-shape in the loaded roller rolling passage 3, the loads applied to the nut member 2 from the rollers 6 act in repulsing directions to each other for the adjacent rollers 6, 6. In an initial stage, a preload A is applied to the respective rollers 6, and the loads are balanced in the vertical and horizontal directions. Supposing that an axial load P is applied to the nut member 2 from this state, and then, the nut member 2 is displaced in the axial direction by an amount δ. In such case, the load of each of the rollers 6 of the α group is increased by the load B and becomes A + B, and on the other hand, the load of each of the rollers 6 of the β group is reduced by a load C and becomes A - C.

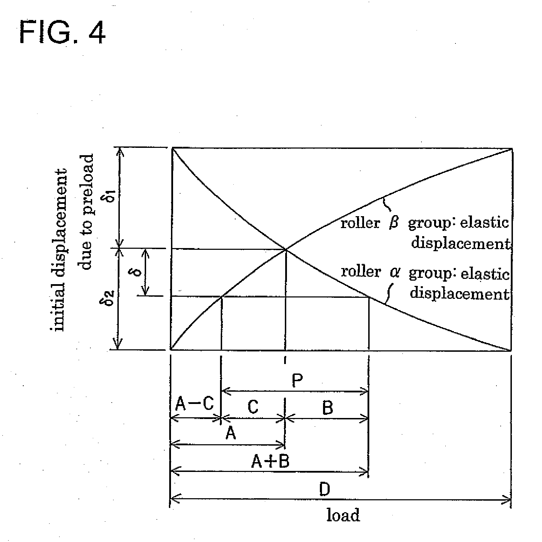

FIG. 4 shows this relationship further in detail. Since the over-sized rollers 6 are inserted so as to apply the preload, the α group rollers 6 are elastically displaced by δ 1 and the β group rollers 6 are elastically displaced by δ 2, and a load caused at that time corresponds to the preload A. When the axial load P is then applied thereto to thereby cause the axial displacement of δ, the displacement increases along the elastic displacement diagram in the α group rollers 6, and on the other hand, the displacement decreases along the elastic displacement diagram in the β group rollers 6. Thus, the load A + B is applied to the α group rollers and the load A - C is applied to the β group rollers. Accordingly, the load P is divided into the loads B and C, which act to the α group rollers and the β group rollers with the directions being changed. Even if this state be changed, the inner load should not be changed, so that this matter is expressed simply as follows.

$$(A + B) - (A - C) - P = 0$$

$$\therefore B + C = P$$

The reason why the rigidity increases by applying the preload resides in the increasing of the number of rollers receiving the load, and hence, the reduction of the load to be applied to each roller. In a use of a roller having a diameter smaller than a prescribed diameter and applied with no preload, only one of the α group rollers and the β group rollers receives the load. However, by applying the preload, both the α group rollers and the β group rollers receive the load, so that the number of the rollers to which the load is applied is made twice. According to this reason, it becomes possible to effectively use the rollers 6 existing in the nut member 2 with respect to the acting external force and to distribute the load so that the rollers which essentially do not receive the load become to receive the load.

As shown in FIG. 3, escape grooves 1b and 2b are further formed to the bottom portions of the roller rolling groove 1a of the screw shaft 1 and the loaded roller rolling grooves 2a along these grooves. To the intersection portions between the upper surface and peripheral surface of the roller 6 and between the bottom surface and peripheral surface thereof, there are formed round portions 6a. Since the dimension L of the roller 6 in the axial direction is smaller than the diameter D of the roller 6, there may cause a case that the roller 6 is displaced during its rolling motion and the round portions 6a of the roller 6 contact the escape groove 1b and 2b. By applying the pre-load to the roller 6, this displacement will easily be caused. Radius of a round portion of the escape groove 1b (2b) is set to be larger than radius of the round portion of the roller so as not to disturb the rotation of the roller by a resistance caused at the time of the displacement. In addition, by forming the escape grooves 1b and 2b, it is not necessary to cut the sharp front end of the V-groove, so that the workability in the cutting operation can be also improved.

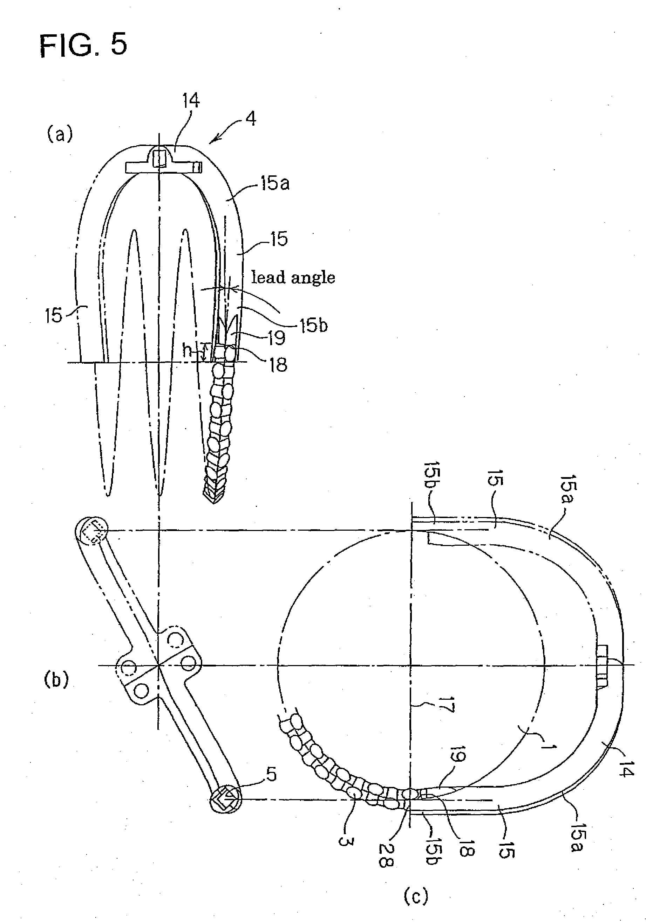

FIG. 5 shows the return pipe 4 to be mounted to the nut member 2. A plurality of return pipes 4 are arranged to the nut member 2 of the number corresponding to the number of the rows of rollers circulating in the return pipes 4. The return pipes 4 serve to connect one and another ends of the loaded roller rolling passage 3 so as to return the roller 6 rolling to the one end of the loaded roller rolling passage 3 to the other end of the loaded roller rolling passage 3 positioned on the succeeding several turns in spiral. Inside the return pipe 4, the roller return passage 5 having square section is formed along the axial direction thereof. Each of the return pipes 4 has a linearly extending central portion 14 and a pair of end portions 15 formed by bending both sides of the central portion 14 by about 90 degrees so as to provide a gate shape as an entire structure. Each end portion 15 has a circular-arc portion 15a having a constant curvature of radius and a linear front end portion 15b extending from the circular-arc portion 15a. As shown in FIG. 5(a), the paired end portions 15b are inclined each other in opposing directions in the lead angle direction as viewed from the side of the screw shaft 1. Further, as shown in FIG. 5(c), as viewed from the axial direction of the screw shaft 1, the front end portion 15b is directed to the tangential direction of the loaded rolling passage. Further, in a state that the return pipes 4 are mounted to the nut member 2 and the central portions 14 of the return pipes 4 are positioned in the horizontal direction, the front end 28 of each return pipe 4 extends toward a horizontal surface 17 including the axis of the screw shaft 1.

In comparison with a circular roller rolling passage as in a cross roller ring, in the spiral loaded roller rolling passage 3, in order to smoothly circulate the rollers, the attitude of the roller is extremely important at the time when the roller 6 is guided inside the return pipe 4 from the loaded roller rolling passage 3 or when the roller 6 is returned to the loaded roller rolling passage 3 from the inside of the return pipe 4. The roller 6 can be returned smoothly in the loaded roller rolling passage 3 without changing the attitude of the roller 6 entering into the loaded roller rolling passage 3 from the return pipe 4 (that is, without inclining the axis of the roller 6, i.e. causing so-called a skew) by returning the roller 6 to the loaded roller rolling passage 3 from the return pipe 4 with the attitude of the roller 6 being inclined by the amount of the lead angle. In addition, the roller 6 can be smoothly returned inside the return pipe 4 from the loaded roller rolling groove 3.

In order to prevent the return pipe 4 and a screw thread of the screw shaft from interfering, a arch-shaped notch 18 is formed to the front end portion 15b along the central line of a track of the roller 6. The shape of the notch 18 viewed from the direction of the axis of the screw shaft 1 provides a circular-arc shape. Further, inside the notch 18, in a state viewed from the axial direction of the screw shaft 1, a roller guide portion 19 is formed so as to intrude inside the screw thread. The sectional shape of the roller return passage 5 at the position of the roller guide portion 19 is formed to be a rectangular shape, i.e. square shape in this embodiment. By forming the roller guide portion 19, a section at which the roller return passage 5 has the square section is made longer in a plane perpendicular to the axis of the return pipe 4. Because of this reason, a space "h" at which the square roller return passage 5 is not formed can be made smaller, and a continuity, in section, between the loaded roller rolling passage 3 and the roller return passage 5 can be provided.

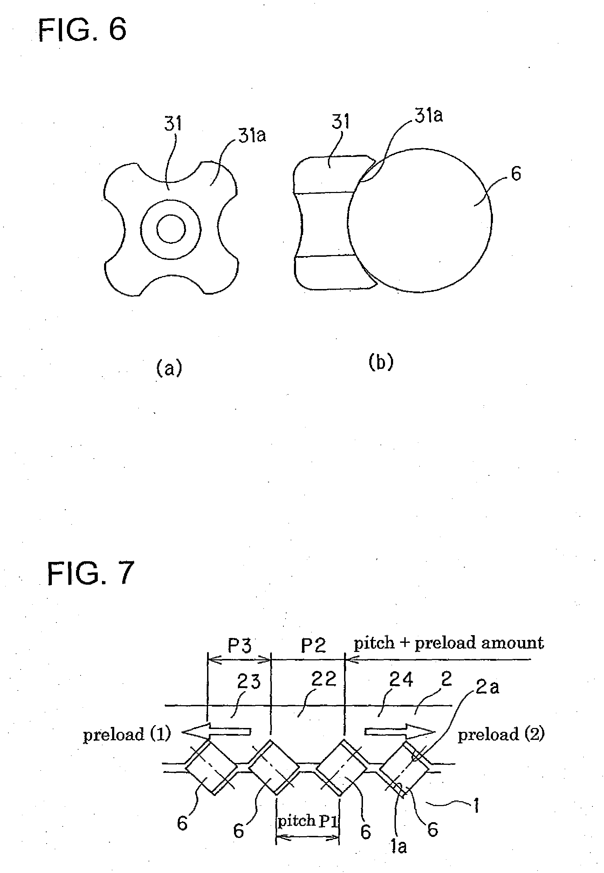

FIG. 6 shows a spacer 31 interposed between the rollers 6. The spacer 31 has both ends in which concave (recessed) portions 31a, 31a are formed so as to provide a curved surface in conformity with the outer peripheral surface of the adjacent rollers 6 to slidably contact the outer peripheral surface of the rollers 6. The curved concave portions 31a, 31a are formed so that the rollers 6 can be disposed in cross arrangement, and the radius of curvature of the curved concave is set to be slightly larger than the radius of the roller 6.

FIG. 7 represents a roller screw according to the second embodiment of the present invention. The basic structures of the screw shaft 1, the nut member 2 and the roller 6 are substantially the same as those of the first embodiment, so that like reference numerals are added to these members and the explanations thereof are omitted herein. In this embodiment, one pitch P2 of the central groove 22 at the central portion of the loaded roller rolling groove 2a of the nut member 2 is set to be slightly larger than the pitch P1 of the screw shaft 1. Further, a pitch P3 of the end grooves 23, 24 on both sides of the central groove 22 is set to be equal to the pitch P1 of the screw shaft.

According to the formation of the loaded roller rolling groove 2a in the manner mentioned above, a preload (compression load) shown with (1) in FIG. 7 is applied to the roller 6 on the side of the end groove 23, and a preload (compression load) shown with (2) in FIG. 7 is applied to the roller 6 on the side of the end groove 24. By applying the preload to the rollers 6, rollers having high rigidity can be provided.

The rollers are disposed in the cross-arrangement in which the roller axes of the adjacent rollers are perpendicular to each other. Further, although not shown, the roller 6 rolling between the roller rolling groove 1a of the screw shaft 1 and the loaded roller rolling groove

2a of the nut member 2 is circulated by the return pipe 4.

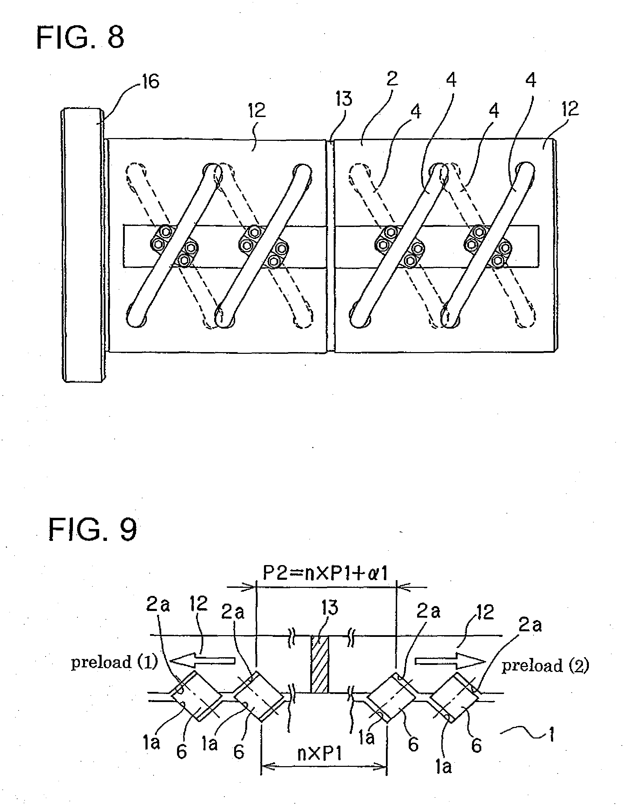

FIGs. 8 and 9 represent a roller screw according to the third embodiment of the present invention. FIG. 8 shows a plan view of the nut member and FIG. 9 shows the roller screw, in an enlarged scale, to which the preload is applied. In this embodiment, the nut member 2 is divided or split into two divided or separated nut pieces 12, 12 in its axial direction, and a shim 13 is interposed between these two nut pieces 12, 12. The structures of the screw shaft 1, the divided nut pieces 12, 12 (corresponding to the nut member 2 of the first embodiment), the roller 6 and the return pipe 4 are substantially the same as those in the first embodiment, so that the like reference numerals are added to these members and the explanations thereof are omitted herein.

The pitch of the loaded roller rolling groove 2a of each of the divided nut pieces 12, 12 is equal to the pitch of the roller rolling groove 1a of the screw shaft 1. By interposing the shim 13 between the divided nut pieces 12, 12, the distance 2P between the loaded roller rolling grooves 2a, 2a arranged on both the sides of the shim 13 is expressed as $P2 = n \times P1 + \alpha1$, in which $\alpha1$: thickness of shim; P1: pitch of loaded roller rolling groove 1a; n: optional integer). The pitch P1 of the loaded roller roiling groove 1a of the screw shaft 1 is always constant, so that the distance P2 between the loaded roller rolling grooves 2a, 2a on the both sides of the shim 13 is widened by an amount corresponding to the thickness of the shim 13 by interposing the shim 13 therebetween. Accordingly, the preload (compression load) shown with (1) in FIG. 7 is applied to the roller 6 in one of the divided nut pieces 12, and on the other hand, the preload (compression load) shown with (2) in FIG. 2 is also applied to the roller 6 in the other one of the divided nut pieces 12. By applying the preloads to the rockers 6, a high rigidity can be applied to the roller screw.

In each of the divided nut pieces 12, the plural rollers 6 are arranged so that the axes of the rollers 6 are directed in the same direction as viewed from the roller advancing direction, i.e. so-called "parallel arrangement". Further, in order to bear the preloads (1) and (2) in the opposing directions, the rollers 6 in one of the divided nut piece 12 are arranged so that the axes thereof are perpendicular to the axes of the rollers 6 in the other one of the divided nut piece 12 as viewed in the roller advancing direction. In the respective nut pieces 12, 12, the rollers 6 rolling between the roller rolling groove 1a of the screw shaft 1 and the loaded roller rolling groove 2a of the nut member 2 are circulated by the return pipe. Furthermore, in an alternation, the rollers 6 may be arranged in crossing form and such rollers 6 may be circulated by the return pipe in each of the divided nut pieces 12.

It is further to be noted that the present invention is not limited to the described embodiments and many other changes and modifications may be made without departing from the scopes of the appended claims. For example, although in the described embodiment, the rollers are circulated by the return pipe, the present invention may be applied to a roller screw of the type in which the return pipe is not provided and the rollers are not circulated thereby.

**Claims**

1. A roller screw comprising:

   a screw shaft formed, on an outer peripheral surface thereof, with a spiral roller rolling groove having a V-shape in section;
   a nut member formed, on an inner peripheral surface thereof, with a spiral loaded roller rolling groove having a V-shape in section opposing to the V-shaped roller rolling groove of the screw shaft; and
   a number of rollers disposed between the roller rolling groove and the loaded roller rolling groove,

   wherein a number of rollers include a roller group ($\alpha$ group) bearing the load in axial one direction of the screw shaft and a roller group ($\beta$ group) arranged in cross shape to be perpendicular to the axis of the $\alpha$ group roller in a roller advancing direction and adapted to bear the load in an direction opposing to the axial one direction of the screw shaft, and each of the number of rollers has a diameter larger than a distance between a wall surface of the roller rolling groove and a wall surface of the loaded roller rolling groove which opposes to the above-mentioned wall surface.

2. A roller screw comprising:

   a screw shaft formed, on an outer peripheral surface thereof, with a spiral roller rolling groove having a V-shape in section;
   a nut member formed, on an inner peripheral surface thereof, with a spiral loaded roller rolling groove having a V-shape in section opposing to the V-shaped roller rolling groove of the screw shaft; and
   a number of rollers disposed between the roller rolling groove and the loaded roller rolling groove,

   wherein the loaded roller rolling groove of the nut member includes a central groove section having a pitch larger than a pitch of the screw shaft and a pair of end groove sections disposed on both sides of the central groove section and having a pitch equal to the pitch of the screw shaft.

3. A roller screw comprising:

a screw shaft formed, on an outer peripheral surface thereof, with a spiral roller rolling groove having a V-shape in section;

a nut member formed, on an inner peripheral surface thereof, with a spiral loaded roller rolling groove having a V-shape in section opposing to the V-shaped roller rolling groove of the screw shaft; and

a number of rollers disposed between the roller rolling groove and the loaded roller rolling groove,

wherein the nut member is divided in an axial direction into a first nut piece and a second nut piece, and a shim is disposed between the first and second nut pieces so as to apply compression loads to the rollers for the first nut piece disposed in the first nut piece and to the rollers for the second nut piece disposed in the second nut piece.

FIG. 1

FIG. 2

FIG. 3

# FIG. 4

# FIG. 5

(a)

lead angle

(b)

(c)

# FIG. 6

(a)                    (b)

# FIG. 7

# FIG. 8

# FIG. 9

$$P2 = n \times P1 + \alpha 1$$

preload (1)

preload (2)

$$n \times P1$$

## INTERNATIONAL SEARCH REPORT

| International application No. |
| --- |
| PCT/JP2004/012945 |

**A. CLASSIFICATION OF SUBJECT MATTER**
Int.Cl⁷ F16H25/22

According to International Patent Classification (IPC) or to both national classification and IPC

**B. FIELDS SEARCHED**

Minimum documentation searched (classification system followed by classification symbols)
Int.Cl⁷ F16H19/00-37/16

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 11-210858 A (Koyo Machine Industries Co., Ltd.), 03 August, 1999 (03.08.99), Full text; Fig. 2 (Family: none) | 1-3 |
| Y | JP 2002-161961 A (Koyo Seiko Co., Ltd.), 07 June, 2002 (07.06.02), Par. No. [0024]; Fig. 2 (Family: none) | 1 |
| Y | JP 2003-194177 A (NSK Ltd.), 09 July, 2003 (09.07.03), Full text; Fig. 7 (Family: none) | 2 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 November, 2004 (26.11.04) | 14 December, 2004 (14.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

EP 1 679 454 A1

| | | |
|---|---|---|
| **INTERNATIONAL SEARCH REPORT** | International application No. | |
| | PCT/JP2004/012945 | |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-276765 A (NTN Corp.), 25 September, 2002 (25.09.02), Par. No. [0027]; Fig. 1 (Family: none) | 3 |

Form PCT/ISA/210 (continuation of second sheet) (January 2004)